# EUROPEAN PATENT APPLICATION

(11) **EP 4 730 080 A1**
(43) Date of publication of application: **22.04.2026**
(21) Application number: 24847680.6
(22) Date of filing: 30.04.2024
(51) Int. Cl.: G06F 1/26

(54) **POWER SUPPLY CIRCUIT BOARD AND COMPUTER DEVICE**

(30) Priority: 28.07.2023 CN 202310950330
(71) Applicant: Huawei Technologies Co., Ltd., Shenzhen, Guangdong 518129 (CN)
(72) Inventor: CAO, Jun, Shenzhen, Guangdong 518129 (CN); WU, Yukun, Shenzhen, Guangdong 518129 (CN); GAO, Junen, Shenzhen, Guangdong 518129 (CN)
(74) Representative: Maiwald GmbH
(86) International application number: PCT/CN2024/090959
(87) International publication number: WO 2025/025714

(57) **Abstract**

A power supply circuit board and a computer device are provided, and relate to the field of power supply technologies. The power supply circuit board is provided with a step-down converter and a power input port, and the step-down converter is electrically connected to the power input port. The power input port is configured to receive an input voltage, and the step-down converter is configured to convert the input voltage into a voltage required by a chip component. The power supply circuit board is further provided with a first connector, and the first connector is electrically connected to the step-down converter. The first connector mates with a second connector of a voltage regulator in the chip component, the first connector is disposed opposite to the second connector, and the chip component obtains, through the first connector, the voltage required by the chip component.

## Description

This disclosure claims priority to Chinese Patent Application No. 202310950330.6, filed on July 28, 2023, and entitled "POWER SUPPLY CIRCUIT BOARD AND COMPUTER DEVICE", which is incorporated herein by reference in its entirety.

### TECHNICAL FIELD

This application relates to the field of power supply technologies, and in particular, to a power supply circuit board and a computer device.

### BACKGROUND

With improvement of a processing capability of a computer device like a server or a supercomputing cluster, power of the computer device increases, and a power supply requirement also increases greatly. For example, a single computer device with an E-level computing capability requires dozens of megawatts of power supply.

In addition, in scenarios such as high performance computing (high performance computing, HPC), artificial intelligence (artificial intelligence, AI), or a supercomputing center, as a computing power requirement continuously increases, components in a computing device and a power supply requirement of the computing device also continuously increase. For example, a computing device in the supercomputing cluster usually needs to use a power supply port that supports a high voltage (for example, 380 volts (V)), and needs to first convert input 380 V into 48 V, and then supply power to components in the computing device. However, 380 V is a non-safe voltage. If a 380 V power supply port is directly used in the computing device, when a maintenance engineer replaces or maintains components such as a chip disposed on a printed circuit board (print circuit board, PCB) of the computing device, there is a risk of an electric shock, and there is a safety hazard.

### SUMMARY

This application provides a power supply circuit board and a computer device. When replacing electronic components such as a chip in a chip component, a maintenance engineer performs an operation only on a chip circuit board that operates at a low voltage. Therefore, there is no risk of a high-voltage electric shock, and a safety hazard caused by a conventional technology can be eliminated. The technical solutions are as follows:

According to an aspect, a power supply circuit board is provided. The power supply circuit board is provided with a step-down converter and a power input port, and the step-down converter is electrically connected to the power input port. The power input port is configured to receive an input voltage, for example, receive a voltage transmitted by a power supply bus. The step-down converter is configured to convert the input voltage into a voltage required by a chip component, for example, configured to convert a high voltage (for example, 380 V) input by the power supply bus into a low voltage (for example, 12 V) required by a voltage regulator in the chip component. For transmission of a voltage to the chip component, correspondingly, the power supply circuit board is further provided with a first connector. The first connector is electrically connected to the step-down converter, and is configured to mate with a second connector of the voltage regulator in the chip component, to transmit the voltage to the voltage regulator. To implement mating between the first connector and the second connector, correspondingly, the first connector is disposed opposite to the second connector. After the first connector mates with the second connector, the chip component can obtain, through the first connector, the voltage required by the chip component.

It may be learned from the foregoing descriptions that in the technical solution to be protected in this application, the power supply circuit board is designed to be decoupled from the chip component, and the step-down converter is disposed on the power supply circuit board. The step-down converter may be electrically connected to a connector of a voltage regulator on a chip circuit board through a connector of the power supply circuit board, to implement a design idea of decoupling the power supply circuit board from the chip circuit board and separating high and low voltages. Because the power supply circuit board implements a non-safe high-voltage input and completes conversion between a high voltage and a low voltage, the chip circuit board transmits only the low voltage, and the power supply circuit board and the chip circuit board are two independent circuit structures. Therefore, when replacing electronic components such as a chip on the chip circuit board, a maintenance engineer performs an operation only on the chip circuit board that operates at the low voltage, and there is no risk of a high-voltage electric shock. This can eliminate a safety hazard caused by the conventional technology.

In a possible implementation, the step-down converter is a first step-down converter whose input voltage is greater than a safe voltage, and the power input port is a first power input port that matches the first step-down converter.

The first step-down converter may be a high ratio step-down converter. A ratio of an input voltage of the first step-down converter to an output voltage of the first step-down converter is large, and the first step-down converter can directly convert a received high voltage (for example, 380 V) into the voltage (for example, 12 V) required by the voltage regulator in the chip component.

In the solution shown in this application, because the power supply circuit board can implement a high-voltage input, the power supply circuit board can receive a voltage transmitted by a high-voltage power supply bus, and convert the high voltage into the voltage required by the chip component, without converting the high voltage into a 48 V voltage. In this way, one stage of voltage conversion is saved, to reduce a power supply loss and reduce operation costs of a computer device.

In a possible implementation, the step-down converter is a second step-down converter whose input voltage is not greater than a safe voltage, and the power input port is a second power input port that matches the second step-down converter.

In the solution shown in this application, the power supply circuit board can implement a low-voltage (for example, 48 V) input. For example, in a scenario in which power of a computer device is not high and a 48 V power supply bus supplies power to the computer device, the step-down converter may be the second step-down converter.

In a possible implementation, the step-down converter is replaceable between the first step-down converter and the second step-down converter. The first step-down converter is a step-down converter whose input voltage is greater than the safe voltage, and the second step-down converter is a step-down converter whose input voltage is not greater than the safe voltage.

The power input port includes the first power input port that matches the first step-down converter. For example, a voltage received by the first power input port is basically equal to the input voltage of the first step-down converter.

The power input port further includes the second power input port that matches the second step-down converter. For example, a voltage received by the second power input port is basically equal to the input voltage of the second step-down converter.

In the solution shown in this application, during application of the power supply circuit board, if the power supply bus is a high-voltage power supply bus, the first step-down converter may be installed on the power supply circuit board; or if the power supply bus is a low-voltage power supply bus, the second step-down converter may be installed on the power supply circuit board. The first step-down converter and the second step-down converter can be installed on a same power supply circuit board. It can be learned that during application of the power supply circuit board, only the first step-down converter or the second step-down converter needs to be selected to be installed on the power supply circuit board based on a type of the power supply bus, so that application flexibility of the power supply circuit board is improved and an application scenario of the power supply circuit board is expanded.

In a possible implementation, the power supply circuit board is further provided with a fifth connector, and the fifth connector is electrically connected to the first power input port, the second power input port, and the first connector separately.

The first step-down converter is provided with a third connector, the second step-down converter is provided with a fourth connector, and the third connector is the same as the fourth connector. For example, a quantity of pins included in the third connector is equal to a quantity of pins included in the fourth connector, and an arrangement manner of the pins included in the third connector is the same as an arrangement manner of the pins included in the fourth connector.

In this case, if the step-down converter is the first step-down converter, the third connector mates with the fifth connector, or if the step-down converter is the second step-down converter, the fourth connector mates with the fifth connector.

In the solution shown in this application, during application of the power supply circuit board, if the power supply bus is a first power supply bus that transmits a high voltage (for example, 380 V), a first bus output connector is plugged into the first power input port, and the step-down converter is the first step-down converter. In this case, the third connector of the first step-down converter mates with the fifth connector of the power supply circuit board. If the power supply bus is a second power supply bus that transmits a low voltage (for example, 48 V), a second bus output connector is plugged into the second power input port, and the step-down converter is the second step-down converter. In this case, the fourth connector of the second step-down converter mates with the fifth connector of the power supply circuit board.

It can be learned that the power supply circuit board may be used in both a high-voltage power supply scenario and a low-voltage power supply scenario, and implements switching by replacing the step-down converter. A switching manner is simple, and switching efficiency is high. In addition, reuse of a connector (namely, the fifth connector) of the power supply circuit board by the first step-down converter and the second step-down converter can reduce space occupied by the connector on the power supply circuit board. This helps reduce a size of the power supply circuit board.

In a possible implementation, the power supply circuit board is further provided with a fifth connector and a sixth connector, the fifth connector is electrically connected to the first power input port and the first connector separately, and the sixth connector is electrically connected to the second power input port and the first connector separately.

The first step-down converter is provided with a third connector, the second step-down converter is provided with a fourth connector, and the third connector is different from the fourth connector. For example, a quantity of pins included in the third connector is equal to a quantity of pins included in the fourth connector, but an arrangement manner of the pins included in the third connector is different from an arrangement manner of the pins included in the fourth connector.

In this case, if the step-down converter is the first step-down converter, the third connector mates with the fifth connector, or if the step-down converter is the second step-down converter, the fourth connector mates with the sixth connector.

In the solution shown in this application, during application of the power supply circuit board, if the power supply bus is a first power supply bus that transmits a high voltage (for example, 380 V), a first bus output connector is plugged into the first power input port, and the step-down converter is the first step-down converter. In this case, the third connector of the first step-down converter mates with the fifth connector. If the power supply bus is a second power supply bus that transmits a low voltage (for example, 48 V), a second bus output connector is plugged into the second power input port, and the step-down converter is the second step-down converter. In this case, the fourth connector of the second step-down converter mates with the sixth connector.

It can be learned that the power supply circuit board may be used in both a high-voltage power supply scenario and a low-voltage power supply scenario, and implements switching by replacing the step-down converter. A switching manner is simple, and switching efficiency is high.

In a possible implementation, the power supply circuit board includes a first power supply circuit board and a second power supply circuit board. A step-down converter of the first power supply circuit board is a first step-down converter, and a power input port of the first power supply circuit board is a first power input port that matches the first step-down converter. A step-down converter of the second power supply circuit board is a second step-down converter, and a power input port of the second power supply circuit board is a second power input port that matches the second step-down converter.

In this case, if a bus output connector of a power supply bus can mate with the first power input port, a first connector of the first power supply circuit board mates with the second connector of the voltage regulator in the chip component. If a bus output connector of a power supply bus can mate with the second power input port, a first connector of the second power supply circuit board mates with the second connector of the voltage regulator in the chip component.

In the solution shown in this application, during application, if the power supply bus is a first power supply bus that transmits a high voltage, a first bus output connector is plugged into the first power input port. In this case, the first power supply circuit board is selected to supply power to the chip component, and the first connector of the first power supply circuit board mates with the second connector of the chip component.

If the power supply bus is a second power supply bus that transmits a low voltage, a second bus output connector is plugged into the second power input port. In this case, the second power supply circuit board is selected to supply power to the chip component, and the first connector of the second power supply circuit board mates with the second connector of the chip component.

It can be learned that the power supply circuit board may be used in both a high-voltage power supply scenario and a low-voltage power supply scenario, and implements switching between high-voltage power supply and low-voltage power supply by replacing different power supply circuit boards. A switching manner is simple, and switching efficiency is high.

In a possible implementation, there is one step-down converter, and the step-down converter and the first connector are arranged on the power supply circuit board based on a shortest transmission path.

In the solution shown in this application, a voltage on a transmission line between the step-down converter and the first connector is low. In this case, when transmission power remains unchanged, according to Ohm's law, a current on the transmission line is large, and a line loss generated during transmission of the large current on the transmission line is high. Therefore, the line loss can be reduced by shortening the transmission line. Therefore, the step-down converter and the first connector are arranged on the power supply circuit board based on the shortest transmission path, to reduce the line loss.

In a possible implementation, there are a plurality of step-down converters, and there are a plurality of first connectors. In addition, the plurality of first connectors form a plurality of first connector groups, and each first connector group includes a plurality of first connectors.

In this case, each step-down converter is electrically connected to all first connectors in one first connector group, and the first connectors and the step-down converter that have an electrical connection relationship are arranged on the power supply circuit board based on a shortest transmission path.

In the solution shown in this application, the step-down converter and the first connector that have the electrical connection relationship are arranged on the power supply circuit board based on the shortest transmission path, to reduce a line loss.

In a possible implementation, the chip component includes a chip circuit board, a chip, and the voltage regulator. The chip is located on one surface of the chip circuit board, and the voltage regulator is located on the other surface of the chip circuit board. For example, the surface that is of the chip circuit board and on which the chip is located may be denoted as an upper surface, and the other surface on which the voltage regulator is located may be denoted as a lower surface. The upper surface and the lower surface that are of the chip circuit board are opposite to each other.

In addition, the chip is disposed opposite to the voltage regulator. For example, the voltage regulator is located directly below the chip. In this way, an electrical connection path between the chip and the voltage regulator is the shortest.

In the solution shown in this application, the chip and the voltage regulator are located on two opposite surfaces of the chip circuit board, and the voltage regulator is located directly below the chip. In this way, the electrical connection path between the chip and the voltage regulator is the shortest. The shortest electrical connection path can reduce a path loss generated during voltage transmission.

According to another aspect, a computer device is provided. The computer device includes a chip component and the power supply circuit board described above. The chip component includes a chip circuit board, a chip, and a voltage regulator. The chip and the voltage regulator are both located on the chip circuit board, and the chip is electrically connected to the voltage regulator. The voltage regulator is provided with a second connector, and a first connector of the power supply circuit board mates with the second connector of the voltage regulator.

In the solution shown in this application, in the computer device, the power supply circuit board is independently designed, and a step-down converter is disposed on the power supply circuit board. The step-down converter may be electrically connected to a connector of the voltage regulator on the chip circuit board through a connector of the power supply circuit board, to implement a design idea of decoupling the power supply circuit board from the chip circuit board and separating high and low voltages. Because the power supply circuit board implements a non-safe high-voltage input and completes conversion between a high voltage and a low voltage, the chip circuit board transmits only the low voltage, and the power supply circuit board and the chip circuit board are two independent circuit structures. Therefore, when replacing electronic components such as a chip on the chip circuit board, a maintenance engineer performs an operation only on the chip circuit board that operates at the low voltage, and there is no risk of a high-voltage electric shock. This can eliminate a safety hazard caused by the conventional technology.

### BRIEF DESCRIPTION OF DRAWINGS

FIG. 1 is a diagram of a structure of a chip component according to a conventional technology;
FIG. 2 is a diagram of a structure of a power supply circuit board according to this application;
FIG. 3 is a diagram of a power supply circuit board mating with a chip component according to this application;
FIG. 4 is a diagram of a structure of a power supply circuit board according to this application;
FIG. 5 is a diagram of a structure of a power supply circuit board according to this application;
FIG. 6 is a diagram of a structure of a power supply circuit board according to this application;
FIG. 7 is a diagram of a step-down converter mating with a power supply circuit board according to this application;
FIG. 8 is a diagram of a structure of a power supply circuit board according to this application;
FIG. 9 is a diagram of a step-down converter mating with a power supply circuit board according to this application;
FIG. 10 is a diagram of a power supply circuit board mating with a chip component according to this application; and
FIG. 11 is a diagram of a structure of a power supply circuit board according to this application.

Reference numerals:

| | | | | | |
|---|---|---|---|---|---|
| 1: | Power supply circuit board; | 11: | First connector; | 12: | Step-down converter; |
| 13: | Power input port; | 14: | Fifth connector; | 15: | Sixth connector; |
| 101: | First power supply circuit board; | 102: | Second power supply circuit board; | 110: | First connector group; |
| 121: | First step-down converter; | 122: | Second step-down converter; | 131: | First power input port; |
| 132: | Second power input port; | 1211: | Third connector; | 1221: | Fourth connector; |
| 2: | Chip component; | 21: | Chip circuit board; | 22: | Chip; |
| 23: | Voltage regulator; | 231: | Second connector; | 3: | Power supply bus; |
| 30: | Bus output connector; | 31: | First power supply bus; | 32: | Second power supply bus; |
| 311: | First bus output connector; | and 321: | Second power supply bus output connector. | | |

### DESCRIPTION OF EMBODIMENTS

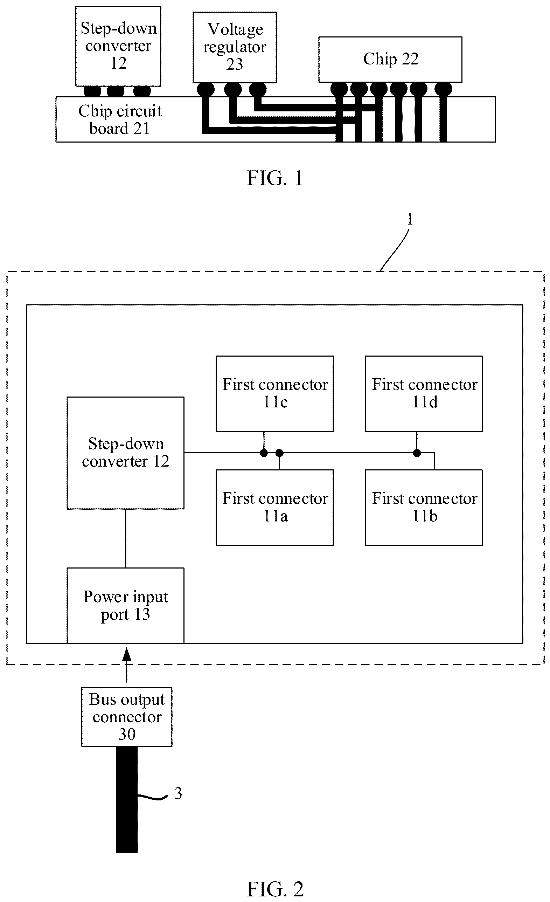

FIG. 1 is a diagram of a chip component of a computer device according to a conventional technology. As shown in FIG. 1, the chip component 2 includes a chip circuit board 21, a chip 22, a step-down converter 12, and a voltage regulator 23. The chip 22, the step-down converter 12, and the voltage regulator 23 are all arranged on the chip circuit board 21. The step-down converter 12 is configured to receive a voltage transmitted by a power supply bus, and perform voltage step-down processing on the received voltage. The voltage regulator 23 is configured to reduce the voltage and output a stable voltage. In this way, the step-down converter 12 receives the voltage transmitted by the power supply bus, reduces the voltage to an input voltage required by the voltage regulator 23, and then transmits the voltage to the voltage regulator 23. The voltage regulator 23 stabilizes the input voltage to a voltage required by the chip 22, and then transmits the voltage to the chip 22.

As a computing power requirement of the computer device continuously increases, a quantity of components in the computer device increases, and a power requirement of the computer device also increases. To reduce currents on a power supply line, high-voltage direct current power supply, for example, 380 V high-voltage direct current power supply, is usually used. However, 380 V is a non-safe voltage. If a 380 V power supply port is directly used in a computing device, when a maintenance engineer replaces or maintains components such as a chip disposed on a printed circuit board of the computing device, there is a risk of an electric shock, and there is a safety hazard.

Therefore, a power port of the chip component 2 is 48 V, and 48 V is in a safe voltage range for direct current power consumption. When the maintenance engineer operates the components such as the chip, there is no risk of an electric shock.

The power port of the chip component 2 is the 48 V power port. When a high-voltage power supply bus supplies power to the chip component 2, a stage of voltage conversion from a high voltage (for example, 380 V) to 48 V needs to be first performed. A conversion loss exists during voltage conversion. As a result, the voltage conversion loss and a line loss cause an electric energy loss of approximately 2% in a single chip component 2. It can be learned that the current computer device has a high power supply loss, and consequently, operation costs of the computer device are high.

It can be learned that, for the computer device provided in the conventional technology, if a high-voltage power supply port (for example, the 380 V power supply port) is used to directly receive a high voltage transmitted by the high-voltage power supply bus, the maintenance engineer is at a risk of an electric shock, and there is a significant safety hazard. If a low-voltage power supply port (for example, a 48 V power supply port) is used to indirectly receive the high voltage transmitted by the high-voltage power supply bus, voltage conversion from a high voltage to a low voltage exists, and there is a voltage conversion loss during voltage conversion. Consequently, a power supply loss is high, and operation costs of the computer device are high.

To resolve the foregoing problem, this application provides a computer device. A power supply circuit board is independently designed, and a step-down converter 12 is disposed on the power supply circuit board 1. The step-down converter 12 may be electrically connected to a connector of a voltage regulator on a chip circuit board 21 through a connector of the power supply circuit board 1, to implement a design idea of decoupling the power supply circuit board 1 from the chip circuit board 21 and separating high and low voltages. Because the power supply circuit board 1 implements a non-safe high-voltage input and completes conversion between a high voltage and a low voltage, the chip circuit board transmits only the low voltage, and the power supply circuit board 1 and the chip circuit board 21 are two independent circuit structures. Therefore, when replacing electronic components such as a chip on the chip circuit board, a maintenance engineer performs an operation only on the chip circuit board that operates at the low voltage, and there is no risk of a high-voltage electric shock. This eliminates the safety hazard caused by the conventional technology shown in FIG. 1.

In addition, because the power supply circuit board can implement a non-safe high-voltage input, the power supply circuit board can receive a voltage transmitted by a high-voltage power supply bus, and convert the high voltage into a voltage required by a chip component, without converting the high voltage into a 48 V voltage. In this way, one stage of voltage conversion is saved, to reduce a power supply loss and reduce operation costs of the computer device.

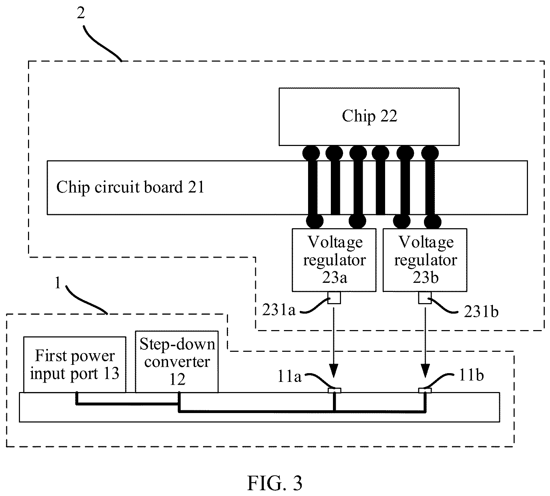

As shown in FIG. 3, the power supply circuit board 1 and a chip component 2 are included. The power supply circuit board 1 is independent of the chip component 2, to implement decoupling of the power supply circuit board 1 from the chip component 2. In this case, when operating a component in the chip component 2, a maintenance engineer only needs to perform an operation on the chip circuit board. The chip circuit board operates only at a low voltage (for example, 12 V), and the maintenance engineer does not need to touch the power supply circuit board 1 that implements conversion between a high voltage and a low voltage. Therefore, no electric shock occurs.

In addition, the power supply circuit board 1 may be a high-voltage power supply circuit board. A high-voltage power supply bus directly provides a high voltage for the power supply circuit board 1, without performing conversion from the high voltage to a 48 V voltage. Therefore, one stage of voltage conversion is saved, to reduce a power supply loss, and reduce operation costs of the computer device.

The following describes the power supply circuit board 1 provided in this application in detail with reference to the accompanying drawings.

As shown in FIG. 2, the power supply circuit board 1 includes a step-down converter 12 and a power input port 13. The step-down converter 12 and the power input port 13 are both located on the power supply circuit board 1. For example, as shown in FIG. 2, the step-down converter 12 and the power input port 13 may be located on a same side of the power supply circuit board 1. For another example, the step-down converter 12 and the power input port 13 may be located on different sides of the power supply circuit board 1.

The step-down converter 12 and the power input port 13 are located on a same side of the power supply circuit board 1. In other words, the step-down converter 12 and the power input port 13 are located on a same surface (for example, an upper surface or a lower surface) of the power supply circuit board 1.

The step-down converter 12 and the power input port 13 are located on different sides of the power supply circuit board 1. In other words, one of the step-down converter 12 and the power input port 13 is located on one surface of the power supply circuit board 1, and the other is located on the other surface of the power supply circuit board 1. For ease of description, the surface on which the step-down converter 12 is disposed is referred to as the upper surface, and the other surface is referred to as the lower surface. The upper surface and the lower surface may be two opposite surfaces of the power supply circuit board 1.

Whether the step-down converter 12 and the power input port 13 are located on the same surface of the power supply circuit board 1 is not specifically limited in this application. In the accompanying drawings, an example in which the step-down converter 12 and the power input port 13 are located on the same surface may be used.

In an example, as shown in FIG. 2, the power input port 13 is configured to mate with a bus output connector 30 of a power supply bus 3, to receive a voltage transmitted by the power supply bus. The step-down converter 12 is configured to receive the voltage transmitted by the power supply bus, and perform voltage step-down processing on the received voltage. Therefore, as shown in FIG. 2, the step-down converter 12 is electrically connected to the power input port 13.

The electrical connection between the step-down converter 12 and the power input port 13 is implemented through a line inside the power supply circuit board 1.

In an example, the power supply circuit board 1 is configured to supply power to the chip in the computer device. Therefore, as shown in FIG. 2, the power supply circuit board 1 has a first connector 11, and the first connector 11 is configured to transmit a voltage to a chip component. In FIG. 2, a first connector 11a, a first connector 11b, a first connector 11c, and a first connector 11d all represent the first connector 11.

Because the first connector 11 needs to receive a voltage obtained through voltage step-down processing performed by the step-down converter 12, as shown in FIG. 2, the first connector 11 is electrically connected to the step-down converter 12.

In the chip component 2, a voltage regulator 23 is configured to receive an externally transmitted voltage. Therefore, as shown in FIG. 3, the voltage regulator 23 has a second connector 231, and the second connector 231 mates with the first connector 11.

The voltage regulator 23 may also be referred to as a voltage regulator module (voltage regulator module, VRM).

Because power of the voltage regulator 23 is less than power of a chip 22, a plurality of voltage regulators 23 are needed to meet a power requirement of the chip 22. For example, if the power of the chip 22 is around 800 W to 1,000 W, and power of a single voltage regulator 23 is approximately 20 W, four or five voltage regulators 23 are needed to supply power to the chip 22. In FIG. 3, two voltage regulators 23 are used as an example. Both a voltage regulator 23a and a voltage regulator 23b in FIG. 3 represent the voltage regulator 23.

Because there are a plurality of voltage regulators 23, there are also a plurality of first connectors 11 that mate with second connectors 231 of the voltage regulators 23. For example, a quantity of first connectors 11 is equal to a quantity of voltage regulators 23. In FIG. 3, two first connectors 11 are used as an example, and in FIG. 2, four first connectors 11 are used as an example.

As shown in FIG. 2, the plurality of first connectors 11 are all electrically connected to the step-down converter 12. The electrical connection is implemented through a line inside the power supply circuit board 1.

As shown in FIG. 3, each first connector 11 mates with a second connector 231 of one voltage regulator 23. Therefore, each first connector 11 is disposed opposite to a second connector 231 of one voltage regulator 23.

For example, as shown in FIG. 3, a first connector 11a is opposite to a second connector 231a of the voltage regulator 23a, and the first connector 11a mates with the second connector 231a. A first connector 11b is opposite to a second connector 231b of the voltage regulator 23b, and the first connector 11b mates with the second connector 231b. An arrow in FIG. 3 indicates a mating relationship and a correspondence.

Because an input voltage, for example, 12 V, 9 V, or 6 V, of the voltage regulator 23 is low, and an operating voltage, for example, less than 1 V, of the chip 22 is lower, only a low safe voltage is transmitted on the chip circuit board 21.

Refer to FIG. 3. The power supply circuit board 1 that supplies power to the chip 22 and the chip component 2 are independent of each other, and can be physically separated. In this case, in a process of plugging or unplugging the chip component into or from a mainboard in a computer device, the maintenance engineer may first separate the chip component 2 from the power supply circuit board 1, and then plugs or unplugs the chip component 2 into or from the mainboard. In this way, the power supply circuit board 1 is not touched when the chip component is plugged or unplugged. When maintaining an electronic component on the chip circuit board, the maintenance engineer performs an operation only on the chip circuit board that operates at a low voltage.

The maintenance engineer does not touch the power supply circuit board 1 during plugging or unplugging of the chip component 2 and maintaining of the electronic component on the chip circuit board. In this case, the power supply circuit board 1 may be a high-voltage power supply circuit board that can receive a high-voltage power supply bus. The power supply circuit board 1 is the high-voltage power supply circuit board. Therefore, the high-voltage power supply bus may directly transmit a high voltage to the power supply circuit board 1, and does not need to first convert the high voltage into a safe voltage value (for example, 48 V). In this way, one stage of voltage conversion is saved, to reduce a power supply loss, and reduce operation costs of the computer device.

The high voltage described in this application may be a voltage higher than 48 V, for example, 120 V, 240 V, 380 V, or 800 V.

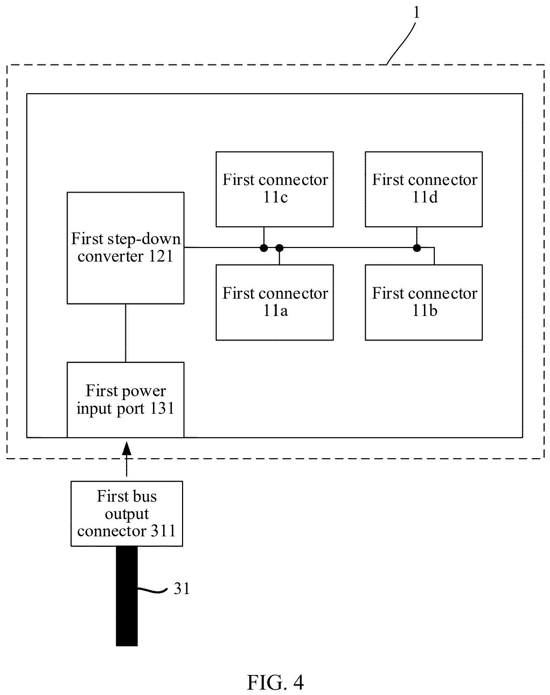

Further, in a solution in which the power supply circuit board 1 is the high-voltage power supply circuit board, as shown in FIG. 4, the power input port 13 of the power supply circuit board 1 is a first power input port 131, the first power input port 131 can receive a high voltage greater than a safe voltage, and the step-down converter 12 is a first step-down converter 121 whose input voltage is greater than the safe voltage and whose output voltage is a voltage required by the voltage regulator 23.

The safe voltage may be a voltage in a range of 40 V to 60 V, for example, a voltage of 48 V. For ease of description, 48 V is used as an example in this application.

The first power input port 131 matches the first step-down converter 121. For example, a voltage received by the first power input port 131 is basically equal to the input voltage of the first step-down converter 121.

The first step-down converter 121 can convert a high voltage into a low voltage, and a ratio of the input voltage of the first step-down converter 121 to the output voltage of the first step-down converter 121 is large. The first step-down converter 121 may be a high ratio step-down converter, and the high ratio step-down converter may also be referred to as a high ratio voltage down module (high ratio voltage down module, HVDM).

For example, the first step-down converter 121 may convert a high voltage of 120 V into a low voltage of 6 V, 9 V, or 12 V. For another example, the first step-down converter 121 may convert a high voltage of 240 V into a low voltage of 6 V, 9 V, or 12 V. For another example, the first step-down converter 121 may convert a high voltage of 380 V into a low voltage of 6 V, 9 V, or 12 V. For another example, the first step-down converter 121 may convert a high voltage of 800 V into a low voltage of 6 V, 9 V, or 12 V.

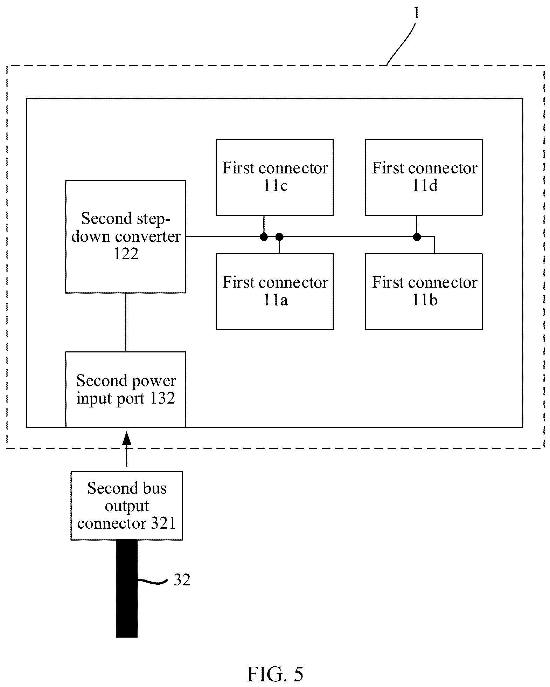

In a possible implementation, in addition to being the high-voltage power supply circuit board, the power supply circuit board 1 may be a low-voltage power supply circuit board. In this case, as shown in FIG. 5, the power input port 13 of the power supply circuit board 1 is a second power input port 132, the second power input port 132 can receive a voltage not greater than a safe voltage, and the step-down converter 12 is a second step-down converter 122 whose input voltage is not greater than the safe voltage and whose output voltage is a voltage required by the voltage regulator 23.

The second power input port 132 matches the second step-down converter 122. For example, a voltage received by the second power input port 132 is basically equal to the input voltage of the second step-down converter 122.

The second step-down converter 122 may also be referred to as a voltage down module (voltage down module, VDM).

For example, a first step-down converter 121 may convert a voltage of 48 V into a low voltage of 6 V, 9 V, or 12 V.

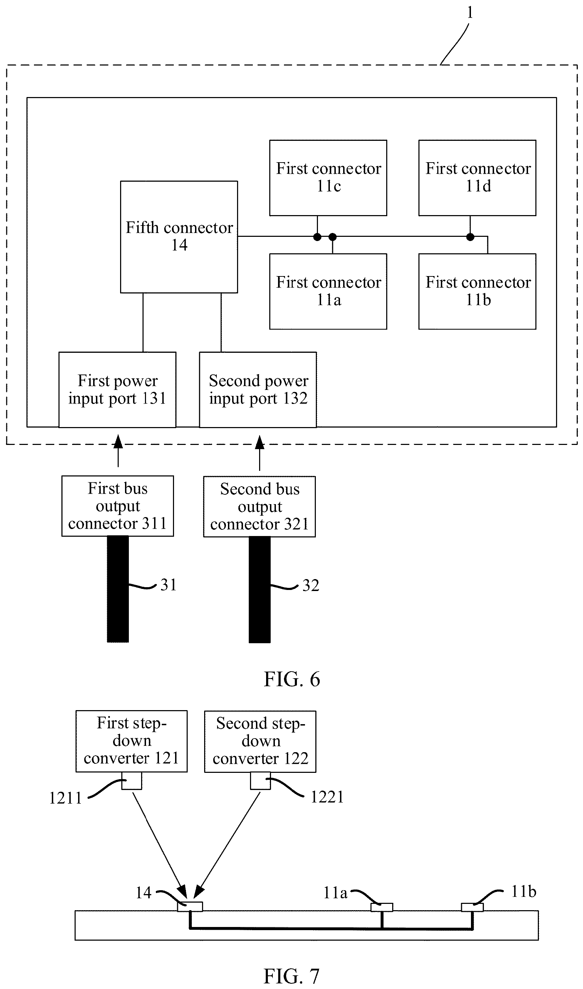

In a possible implementation, the power supply circuit board 1 may serve as a high-voltage power supply circuit board, or may serve as a low-voltage power supply circuit board. In this case, as shown in FIG. 7, the step-down converter 12 is replaceable between the first step-down converter 121 and the second step-down converter 122, and the first step-down converter 121 and the second step-down converter 122 can be disposed on a same power supply circuit board 1.

In this case, as shown in FIG. 6, the power input port 13 includes a first power input port 131 and a second power input port 132. The first power input port 131 matches the first step-down converter 121, and the second power input port 132 matches the second step-down converter 122.

In this way, as shown in FIG. 6, when a first bus output connector 311 of an external high-voltage power supply bus (denoted as a first power supply bus 31) is plugged into the first power input port 131, the power supply circuit board 1 is the high-voltage power supply circuit board. Still refer to FIG. 6. When a second bus output connector 321 of an external low-voltage power supply bus (denoted as a second power supply bus 32) is plugged into the second power input port 132, the power supply circuit board 1 is the low-voltage power supply circuit board.

In this way, during application of the power supply circuit board 1, only the first step-down converter 121 or the second step-down converter 122 needs to be selected to be installed on the power supply circuit board 1 based on a type of the power supply bus, so that application flexibility of the power supply circuit board is improved and an application scenario of the power supply circuit board 1 is expanded.

In a possible implementation, an implementation in which the first step-down converter 121 and the second step-down converter 122 can be disposed on the same power supply circuit board 1 may be that the first step-down converter 121 and the second step-down converter 122 share a connector of the power supply circuit board 1.

In an example, as shown in FIG. 6, the power supply circuit board 1 has a fifth connector 14, and the fifth connector 14 is electrically connected to the first power input port 131, the second power input port 132, and a plurality of first connectors 11 separately.

As shown in FIG. 7, the first step-down converter 121 has a third connector 1211, the second step-down converter 122 has a fourth connector 1221, and the third connector 1211 is the same as the fourth connector 1221.

The third connector 1211 is the same as the fourth connector 1221. In other words, a quantity of pins included in the third connector 1211 is equal to a quantity of pins included in the fourth connector 1221, and an arrangement manner of the pins included in the third connector 1211 is the same as an arrangement manner of the pins included in the fourth connector 1221.

In an example, during processing of the first step-down converter 121 and the second step-down converter 122, to make the third connector 1211 of the first step-down converter 121 the same as the fourth connector 1221 of the second step-down converter 122, the first step-down converter 121 and the second step-down converter 122 may be packaged in a same packaging manner, and packaged into a same shape and a same volume.

In this way, during application of the power supply circuit board 1, as shown in FIG. 6, if the power supply bus is the first power supply bus 31, and the first bus output connector 311 is plugged into the first power input port 131, the step-down converter 12 is the first step-down converter 121. In this case, as shown in FIG. 7, the third connector 1211 of the first step-down converter 121 mates with the fifth connector 14. Still refer to FIG. 6. If the power supply bus is the second power supply bus 32, and the second bus output connector 321 is plugged into the second power input port 132, the step-down converter 12 is the second step-down converter 122. In this case, as shown in FIG. 7, the fourth connector 1221 of the second step-down converter 122 mates with the fifth connector 14.

In a possible implementation, another implementation in which the first step-down converter 121 and the second step-down converter 122 can be disposed on the same power supply circuit board 1 may be that the power supply circuit board 1 has a connector configured to be connected to the first step-down converter 121 and a connector configured to be connected to the second step-down converter 122.

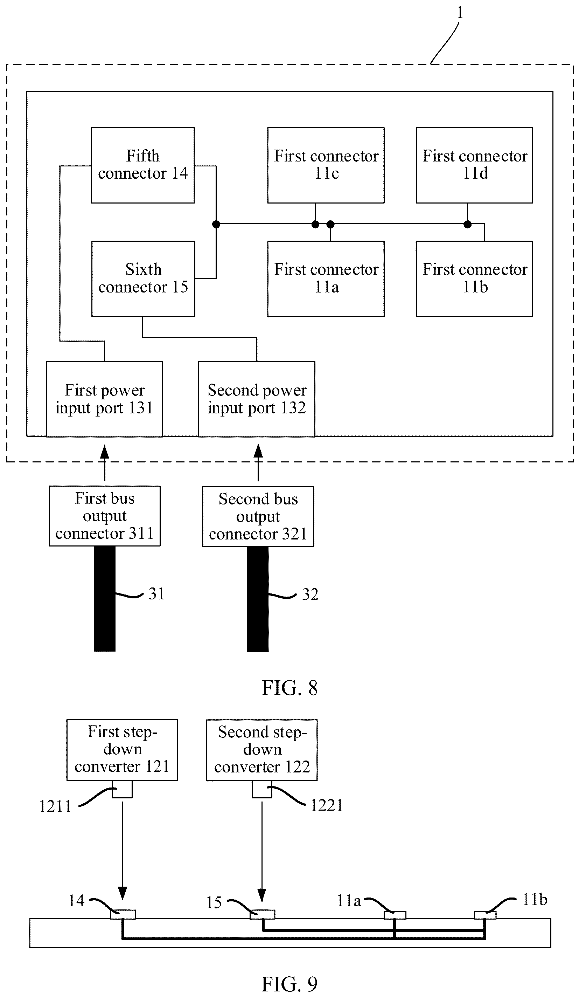

In an example, as shown in FIG. 8, the power supply circuit board 1 has a fifth connector 14 and a sixth connector 15. The fifth connector 14 is electrically connected to the first power input port 131 and the plurality of first connectors 11 separately, and the sixth connector 15 is electrically connected to the second power input port 132 and the plurality of first connectors 11 separately.

As shown in FIG. 9, the first step-down converter 121 has a third connector 1211, the second step-down converter 122 has a fourth connector 1221, and the third connector 1211 is different from the fourth connector 1221.

The third connector 1211 is different from the fourth connector 1221. For example, a quantity of pins included in the third connector 1211 is equal to a quantity of pins included in the fourth connector 1221. However, an arrangement manner of the pins included in the third connector 1211 is different from an arrangement manner of the pins included in the fourth connector 1221.

In an example, during processing of the first step-down converter 121 and the second step-down converter 122, a shape of the first step-down converter 121 may be the same as a shape of the second step-down converter 122. However, a volume of a packaged first step-down converter 121 is greater than a volume of a packaged second step-down converter 122.

In this way, during application of the power supply circuit board 1, as shown in FIG. 8, if the power supply bus is the first power supply bus 31, and the first bus output connector 311 is plugged into the first power input port 131, the step-down converter 12 is the first step-down converter 121. In this case, as shown in FIG. 9, the third connector 1211 of the first step-down converter 121 mates with the fifth connector 14. Still refer to FIG. 8. If the power supply bus is the second power supply bus 32, and the second bus output connector 321 is plugged into the second power input port 132, the step-down converter 12 is the second step-down converter 122. In this case, as shown in FIG. 9, the fourth connector 1221 of the second step-down converter 122 mates with the sixth connector 15.

In the foregoing, different power supply buses are matched by replacing the step-down converter 12. In another possible implementation, different power supply buses may be matched by replacing the power supply circuit board 1.

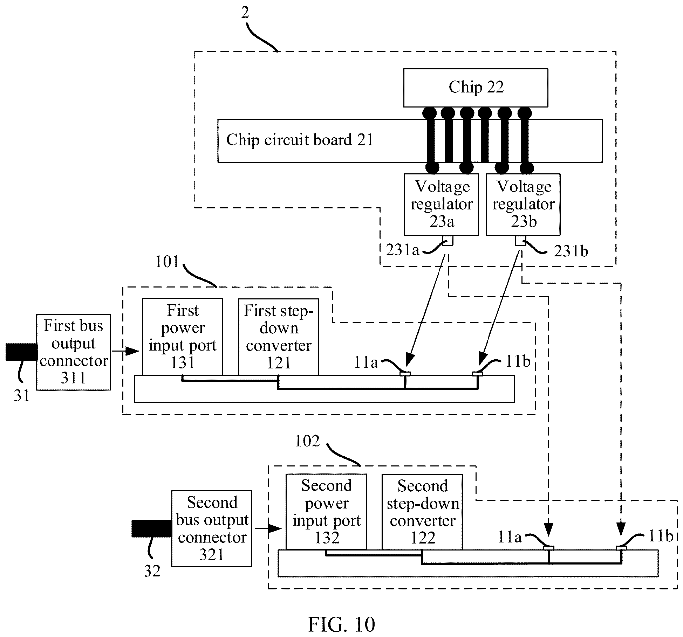

As shown in FIG. 10, the power supply circuit board 1 includes a first power supply circuit board 101 and a second power supply circuit board 102. A step-down converter 12 on the first power supply circuit board 101 is a first step-down converter 121, and a power input port 13 of the first power supply circuit board 101 is a first power input port 131 that matches the first step-down converter 121. Still refer to FIG. 10. A step-down converter 12 on the second power supply circuit board 102 is a second step-down converter 122, and a power input port 13 of the second power supply circuit board 102 is a second power input port 132 that matches the second step-down converter 122.

As shown in FIG. 10, if the power supply bus is the first power supply bus 31, and the first bus output connector 311 is plugged into the first power input port 131, the first power supply circuit board 101 is selected to supply power to the chip 22. In this case, as shown in FIG. 10, a first connector 11 of the first power supply circuit board 101 mates with the second connector 231 of the chip component 2 (as shown by a solid arrow in FIG. 10).

Still refer to FIG. 10. If the power supply bus is the second power supply bus 32, and the second bus output connector 321 is plugged into the second power input port 132, the second power supply circuit board 102 is selected to supply power to the chip 22. In this case, as shown in FIG. 10, a first connector 11 of the second power supply circuit board 102 mates with the second connector 231 of the chip component 2 (as shown by a dashed arrow in FIG. 10).

As shown in FIG. 10, the first connector 11 of the power supply circuit board 1 mates with the second connector 231 of the chip component 2, and the first connector 11 mates with the second connector 231 in a plurality of manners. The following describes several mating manners.

In a possible implementation, the first connector 11 mates with the second connector 231 in a blind mating manner. In this case, one of the first connector 111 and the second connector 231 is an electrical port, and the other is an electrical connector. The electrical port and the electrical connector each include a plurality of pins, and a quantity of pins of the electrical port is equal to a quantity of pins of the electrical connector. When the electrical connector is plugged into the electrical port, the plurality of pins of the electrical connector are connected to the plurality of pins of the electrical port in a one-to-one correspondence manner. For example, the first connector 11 may be the electrical port, and the second connector 231 may be the electrical connector. Optionally, alignment of the electrical port and the electrical connector may be implemented by using a limiting structure, to implement a quick connection between the electrical port and the electrical connector.

In a possible implementation, the first connector 11 mates with the second connector 231 in a crimping manner. In this case, one of the first connector 11 and the second connector 231 is a contact, and the other is a spring finger. There are a plurality of contacts and a plurality of spring fingers, and a quantity of contacts is equal to a quantity of spring fingers. During mating, each spring finger presses against one contact to implement a stable connection. For example, the first connector 11 is the contact, and the second connector 231 is the spring finger.

Optionally, when the first connector 11 mates with the second connector 231 in the crimping manner, in addition to the foregoing manner of using the contact and the spring finger, the first connector 11 may alternatively mate with the second connector 231 in a crimping manner by using a pogo target and a pogo pin. For example, the first connector 11 is the pogo target, and the second connector 231 is the pogo pin. Optionally, the first connector 11 may be the pogo pin, and the second connector 231 may be the pogo target.

It should be noted that there are a plurality of pogo targets and a plurality of pogo pins, and a quantity of pogo targets is equal to a quantity of pogo pins. During mating, each pogo pin presses tightly against one pogo target to implement a stable connection.

As shown in FIG. 7 and FIG. 8, in a solution in which the step-down converter 12 is replaceable, to facilitate replacement of the step-down converter 12 between the first step-down converter 121 and the second step-down converter 122, the step-down converter 12 is also installed on the power supply circuit board 1 through a connector.

For example, as shown in FIG. 7, the third connector 1211 of the first step-down converter 121 and the fourth connector 1221 of the second step-down converter 122 are the same, and both mate with the fifth connector 14 of the power supply circuit board 1. For a mating manner, refer to the foregoing descriptions. The mating may be implemented in a blind mating manner and a crimping manner. Details are not described herein again.

For another example, as shown in FIG. 9, the third connector 1211 of the first step-down converter 121 mates with the fifth connector 14 of the power supply circuit board 1, and the fourth connector 1221 of the second step-down converter 122 mates with the sixth connector 15 of the power supply circuit board 1. For a mating manner, refer to the foregoing descriptions. The mating may be implemented in a blind mating manner and a crimping manner. Details are not described herein again.

As shown in FIG. 10, in a solution in which the power supply circuit board 1 is replaceable, a connection manner between the step-down converter 12 and the power supply circuit board 1 may be detachable mating, or may be a fixed connection (for example, welding).

For example, the first step-down converter 121 and the power supply circuit board 1 may be welded, or may mate with each other. A specific implementation of the mating may be the foregoing blind mating or crimping manner.

For another example, the second step-down converter 122 and the power supply circuit board 1 may be welded, or may mate with each other. A specific implementation of the mating may be the foregoing blind mating or crimping manner.

The foregoing describes the solution in which the step-down converter 12 is replaceable and the solution in which the power supply circuit board 1 is replaceable. The following describes a quantity of step-down converters 12 included in the power supply circuit board 1.

As described above, the step-down converter 12 may be the first step-down converter 121, may be the second step-down converter 122, or may include the first step-down converter 121 and the second step-down converter 122. In this case, if the step-down converter 12 is the first step-down converter 121, the quantity of step-down converters 12 is a quantity of first step-down converters 121. If the step-down converter 12 is the second step-down converter 122, the quantity of step-down converters 12 is a quantity of second step-down converters 122. If the step-down converter 12 includes the first step-down converter 121 and the second step-down converter 122, the quantity of step-down converters 12 is a quantity of first step-down converters 121 and a quantity of second step-down converters 122, and the quantity of first step-down converters 121 is equal to the quantity of second step-down converters 122.

In a possible implementation, as shown in FIG. 2, there is one step-down converter 12, and the step-down converter 12 supplies power to the chip 22 in the chip component 2.

For example, in a solution in which one power supply circuit board 1 supplies power to a chip 22 in one chip component 2, the power supply circuit board 1 may include one step-down converter 12. If the computer device includes a plurality of chip components 2, there are a plurality of power supply circuit boards 1, which respectively supply power to the plurality of chip components 2.

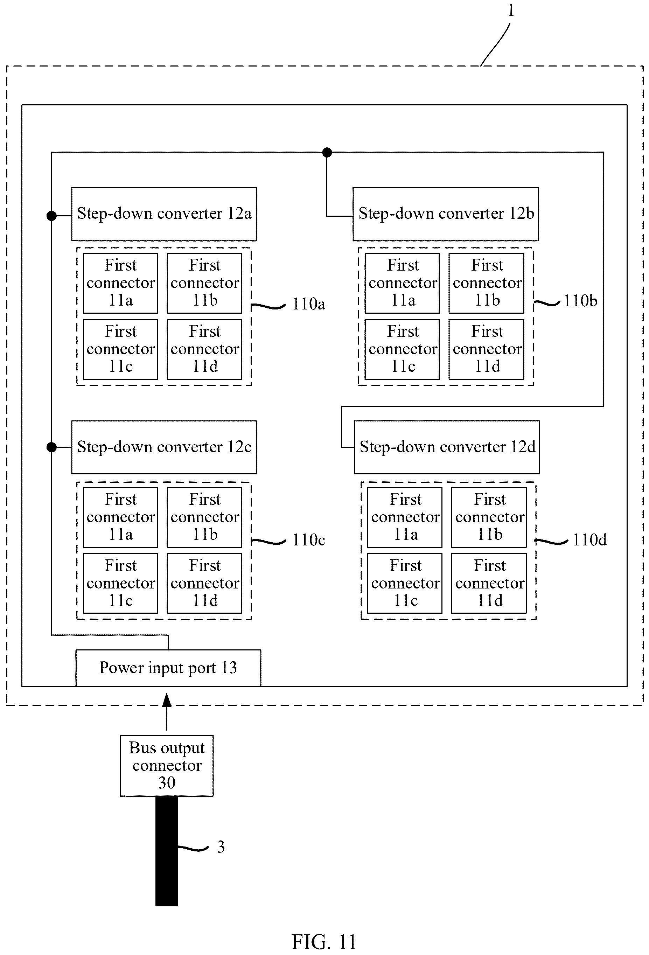

In a possible implementation, as shown in FIG. 11, there are a plurality of step-down converters 12. In FIG. 11, a step-down converter 12a, a step-down converter 12b, a step-down converter 12c, and a step-down converter 12d all represent the step-down converter 12, and four step-down converters 12 are used as an example.

For example, in a solution in which one power supply circuit board 1 supplies power to chips 22 in a plurality of chip components 2, the power supply circuit board 1 may include a plurality of step-down converters 12. As shown in FIG. 11, a plurality of first connectors 11 form a plurality of first connector groups 110. Each first connector group 110 includes a plurality of first connectors 11, and each step-down converter 12 is electrically connected to all first connectors 11 in one first connector group 110.

In FIG. 11, a first connector group 110a, a first connector group 110b, a first connector group 110c, and a first connector group 110d all represent the first connector group 110. In FIG. 11, four first connector groups 110 are used as an example, where each first connector group 110 includes four first connectors 11.

In an example, as shown in FIG. 11, the step-down converter 12a is electrically connected to all first connectors 11 in the first connector group 110a, and the plurality of first connectors 11 in the first connector group 110a respectively mate one-to-one with a plurality of second connectors 231 of one chip component (denoted as a first chip component).

The step-down converter 12b is electrically connected to all first connectors 11 in the first connector group 110b, and the plurality of first connectors 11 in the first connector group 110b respectively mate one-to-one with a plurality of second connectors 231 of one chip component (denoted as a second chip component).

The step-down converter 12c is electrically connected to all first connectors 11 in the first connector group 110c, and the plurality of first connectors 11 in the first connector group 110c respectively mate one-to-one with a plurality of second connectors 231 of one chip component (denoted as a third chip component).

The step-down converter 12d is electrically connected to all first connectors 11 in the first connector group 110d, and the plurality of first connectors 11 in the first connector group 110d respectively mate one-to-one with a plurality of second connectors 231 of one chip component (denoted as a fourth chip component).

The first chip component, the second chip component, the third chip component, and the fourth chip component are different from each other.

In an example, regardless of whether there are one or more step-down converters 12, the step-down converter 12 and the first connector 11 that have an electrical connection relationship may be as close as possible on the power supply circuit board 1, for example, may be arranged based on a shortest transmission path.

For example, if there is one step-down converter 12, the step-down converter 12 and each first connector 11 are arranged on the power supply circuit board 1 based on the shortest transmission path.

For another example, if there are a plurality of step-down converters 12, the first connectors 11 and the step-down converters 12 that have an electrical connection relationship are arranged on the power supply circuit board 1 based on the shortest transmission path. For example, the step-down converter 12a and all the first connectors 11 in the first connector group 110a are arranged on the power supply circuit board 1 based on the shortest transmission path.

A reason for arranging the step-down converter 12 and the first connector 11 that have the electrical connection relationship on the power supply circuit board 1 based on the shortest transmission path is as follows: A voltage on a transmission line between the step-down converter 12 and the first connector 11 is low. In this case, when transmission power remains unchanged, according to Ohm's law, a current on the transmission line is large, and a line loss generated during transmission of the large current on the transmission line is high. Therefore, the line loss can be reduced by shortening the transmission line. Therefore, the step-down converter 12 and the first connector 11 that have the electrical connection relationship are arranged on the power supply circuit board 1 based on the shortest transmission path.

In an example, because a voltage on a transmission line between a power input structure 13 and the step-down converter 12 is high, a current on the transmission line is not excessively large, and a generated line loss is also not high. Therefore, when the power input port 13, the step-down converter 12, and the first connector 11 are arranged on the power supply circuit board 1, a transmission path between the step-down converter 12 and the first connector 11 that have the electrical connection relationship is first considered, so that the transmission path between the step-down converter 12 and the first connector 11 that have the electrical connection relationship is as short as possible. Then, a transmission path between the step-down converter 12 and the power input port 13 is considered, so that the transmission path between the step-down converter 12 and the power input port 13 is as short as possible, to further reduce the line loss.

To further reduce a transmission line loss of the computer device, correspondingly, as shown in FIG. 3, the chip 22 is located on one surface of the chip circuit board 21, the plurality of voltage regulators 23 are located on the other surface of the chip circuit board 21, and the chip 22 is opposite to the plurality of voltage regulators 23. The chip 22 is electrically connected to the voltage regulators 23 through vertical lines inside the chip circuit board 21.

In an example, the chip 22 is located on one surface of the chip circuit board 21. For example, as shown in FIG. 3, the surface that is of the chip circuit board 21 and on which the chip 22 is located may be denoted as an upper surface of the chip circuit board 21. The plurality of voltage regulators 23 are located on the other surface of the chip circuit board 21. For example, as shown in FIG. 3, the other surface that is of the chip circuit board 21 and on which the plurality of voltage regulators 23 are located may be denoted as a lower surface. The upper surface and the lower surface may be two opposite surfaces of the chip circuit board 21.

In an example, the chip 22 is opposite to the plurality of voltage regulators 23. Still refer to FIG. 3. The plurality of voltage regulators 23 may be located directly below the chip 22.

In this way, because the chip 22 and the plurality of voltage regulators 23 are located on different sides of the chip circuit board 21, and the chip 22 is opposite to the plurality of voltage regulators 23, the chip 22 may be electrically connected to the voltage regulators 23 through the vertical lines inside the chip circuit board 21. In this case, the chip 22 is vertically connected to the voltage regulators 23.

As shown in FIG. 3, the vertical connection between the chip 22 and the voltage regulators 23 can shorten a transmission path between the chip 22 and the voltage regulators 23 compared with a horizontal connection between the chip 22 and the voltage regulator 23 shown in FIG. 1. A transmission line loss is reduced once the transmission path is shortened.

In a possible implementation, there may be areas in which no component is installed on the power supply circuit board 1. These areas may be used to install some functional components, so that the power supply circuit board 1 can integrate other functions. For example, a network component may be disposed on the power supply circuit board 1, so that the power supply circuit board 1 can integrate a function of a network interface card.

In a possible implementation, the power supply circuit board 1 may be a newly added circuit board in the computer device, and the power supply circuit board 1 is different from a mainboard in the computer device. In another possible implementation, the power supply circuit board 1 may alternatively be the mainboard in the computer device.

In the solution shown in this application, the power supply circuit board 1 that supplies power to the chip 22 and the chip component 2 are independent of each other, and can be physically separated. In this case, in a process of plugging or unplugging the chip component 2 into or from the mainboard in the computer device, the maintenance engineer may first separate the chip component 2 from the power supply circuit board 1, and then plugs or unplugs the chip component 2 into or from the mainboard. In this way, the power supply circuit board 1 is not touched when the chip component is plugged or unplugged, and a safety hazard caused by the conventional technology can be eliminated.

The maintenance engineer does not touch the power supply circuit board 1 in the process of plugging or unplugging the chip component 2 into or from the mainboard. In this case, the power supply circuit board 1 may be a high-voltage power supply circuit board that can receive a high-voltage power supply bus. The power supply circuit board 1 is the high-voltage power supply circuit board. Therefore, the high-voltage power supply bus may directly transmit a high voltage to the power supply circuit board 1, and does not need to first convert the high voltage into a safe voltage value (for example, 48 V). In this way, one stage of voltage conversion is saved, to reduce a power supply loss, and reduce operation costs of the computer device.

Although the power supply circuit board is used to implement a non-safe high-voltage input, the power supply circuit board and the chip circuit board are two independent circuit structures, and the chip circuit board only transmits a low voltage. Therefore, when replacing electronic components such as a chip in the chip component, the maintenance engineer performs an operation only on the chip circuit board that operates at a low voltage. Therefore, there is no risk of a high-voltage electric shock, and a safety hazard caused by the conventional technology can be eliminated.

This application further provides a computer device. The computer device may be a server, a switch, a router, or the like. The server may be specifically a cabinet server, or may be a node server in a supercomputing cluster.

The computer device may include a chip component 2 and the power supply circuit board 1 described above. For the chip component 2, refer to FIG. 3 and FIG. 10. For the power supply circuit board 1, refer to FIG. 2 to FIG. 11.

The foregoing descriptions are merely specific implementations of this application. Any variation or replacement readily figured out by a person skilled in the art based on the specific implementations provided in this application shall fall within the protection scope of this application.

## Claims

1. A power supply circuit board (1), wherein
the power supply circuit board (1) is provided with a step-down converter (12) and a power input port (13), the step-down converter (12) is electrically connected to the power input port (13), the power input port (13) is configured to receive an input voltage, and the step-down converter (12) is configured to convert the input voltage into a voltage required by a chip component; and
the power supply circuit board (1) is further provided with a first connector (11), the first connector (11) is electrically connected to the step-down converter (12), the first connector (11) mates with a second connector (231) of a voltage regulator (23) in the chip component (2), the first connector (11) is disposed opposite to the second connector (231), and the chip component (2) obtains, through the first connector (11), the voltage required by the chip component.

2. The power supply circuit board (1) according to claim 1, wherein the step-down converter (12) is a first step-down converter (121) whose input voltage is greater than a safe voltage, and the power input port (13) is a first power input port (131) that matches the first step-down converter (121).

3. The power supply circuit board (1) according to claim 1, wherein the step-down converter (12) is a second step-down converter (122) whose input voltage is not greater than a safe voltage, and the power input port (13) is a second power input port (132) that matches the second step-down converter (122).

4. The power supply circuit board (1) according to any one of claims 1 to 3, wherein the step-down converter (12) is replaceable between the first step-down converter (121) and the second step-down converter (122);
the power input port (13) comprises the first power input port (131) that matches the first step-down converter (121) and the second power input port (132) that matches the second step-down converter (122); and
the first step-down converter (121) is a step-down converter whose input voltage is greater than the safe voltage, and the second step-down converter (122) is a step-down converter whose input voltage is not greater than the safe voltage.

5. The power supply circuit board (1) according to claim 4, wherein the power supply circuit board (1) is further provided with a fifth connector (14), and the fifth connector (14) is electrically connected to the first power input port (131), the second power input port (132), and the first connector (11) separately;
the first step-down converter (121) is provided with a third connector (1211), the second step-down converter (122) is provided with a fourth connector (1221), and the third connector (1211) is the same as the fourth connector (1221); and
if the step-down converter (12) is the first step-down converter (121), the third connector (1211) mates with the fifth connector (14), or if the step-down converter (12) is the second step-down converter (122), the fourth connector (1221) mates with the fifth connector (14).

6. The power supply circuit board (1) according to claim 4, wherein the power supply circuit board (1) is further provided with a fifth connector (14) and a sixth connector (15), the fifth connector (14) is electrically connected to the first power input port (131) and the first connector (11) separately, and the sixth connector (15) is electrically connected to the second power input port (132) and the first connector (11) separately;
the first step-down converter (121) is provided with a third connector (1211), the second step-down converter (122) is provided with a fourth connector (1221), and the third connector (1211) is different from the fourth connector (1221); and
if the step-down converter (12) is the first step-down converter (121), the third connector (1211) mates with the fifth connector (14), or if the step-down converter (12) is the second step-down converter (122), the fourth connector (1221) mates with the sixth connector (15).

7. The power supply circuit board (1) according to any one of claims 1 to 3, wherein the power supply circuit board (1) comprises a first power supply circuit board (101) and a second power supply circuit board (102), a step-down converter (12) of the first power supply circuit board (101) is a first step-down converter (121), and a power input port (13) of the first power supply circuit board (101) is a first power input port (131) that matches the first step-down converter (121);
a step-down converter (12) of the second power supply circuit board (102) is a second step-down converter (122), and a power input port (13) of the second power supply circuit board (102) is a second power input port (132) that matches the second step-down converter (122); and
if a bus output connector (30) of a power supply bus (3) can mate with the first power input port (131), a first connector (11) of the first power supply circuit board (101) mates with the second connector (231) of the voltage regulator (23) in the chip component (2); or
if a bus output connector (30) of a power supply bus (3) can mate with the second power input port (132), a first connector (11) of the second power supply circuit board (102) mates with the second connector (231) of the voltage regulator (23) in the chip component (2).

8. The power supply circuit board (1) according to any one of claims 1 to 7, wherein there is one step-down converter (12), and the step-down converter (12) and the first connector (11) are arranged on the power supply circuit board (1) based on a shortest transmission path.

9. The power supply circuit board (1) according to any one of claims 1 to 7, wherein there are a plurality of step-down converters (12);
there are a plurality of first connectors (11), and the plurality of first connectors (11) form a plurality of first connector groups (110), and each first connector group (110) comprises a plurality of first connectors (11); and
each step-down converter (12) is electrically connected to all first connectors (11) in one first connector group (110), and the first connectors (11) and the step-down converter (12) that have an electrical connection relationship are arranged on the power supply circuit board (1) based on a shortest transmission path.

10. The power supply circuit board (1) according to any one of claims 1 to 9, wherein the chip component (2) comprises a chip circuit board (21), a chip (22), and the voltage regulator (23); and
the chip (22) is located on one surface of the chip circuit board (21), the voltage regulator (23) is located on the other surface of the chip circuit board (21), the chip (22) is disposed opposite to the voltage regulator (23), and the chip (22) is electrically connected to the voltage regulator (23).

11. A computer device, wherein the computer device comprises a chip component (2) and the power supply circuit board (1) according to any one of claims 1 to 10;
the chip component (2) comprises a chip circuit board (21), a chip (22), and a voltage regulator (23), the chip (22) and the voltage regulator (23) are both located on the chip circuit board (21), and the chip (22) is electrically connected to the voltage regulator (23); and
the voltage regulator (23) is provided with a second connector (231), and a first connector (11) of the power supply circuit board (1) mates with the second connector (231) of the voltage regulator (23).
